# EUROPEAN PATENT APPLICATION

(11) **EP 3 410 679 A1**
(43) Date of publication of application: **05.12.2018**
(21) Application number: 18175481.3
(22) Date of filing: 01.06.2018
(51) Int. Cl.: H04M 1/60, H04M 1/725, G10L 15/28, G06F 3/16

(54) **MICROPHONE DISABLING SYSTEM**

(30) Priority: 02.06.2017 US 201762514184 P
(71) Applicant: Harman International Industries, Incorporated, Stamford, CT 06901 (US)
(72) Inventor: GELLING, Richard R., Plano, TX 75074 (US); BOGUE, Matthew W., Plano, TX 75025 (US); LE, Phong Viet-Thanh, Stamford, CT 06901 (US)
(74) Representative: Bertsch, Florian Oliver

(57) **Abstract**

A microphone-disabling system for a voice agent speaker may include a microphone for receiving audio signals including voice command, a processor configured to process the voice commands, and an electronic circuit coupled to the processor to pass the audio signals from the microphone to the processor. The system may further include a user interface switch coupled to the electronic circuit and configured to receive user input, the electronic circuit including an electronic switch configured to disable audio commands from being transmitted to the processor in response to the user input at the user interface switch.

## Description

### TECHNICAL FIELD

Aspects disclosed herein generally relate to microphone disabling systems.

### BACKGROUND

Voice agent devices may include voice controlled personal assistants that implement artificial intelligence based on user audio commands. Some examples of voice agent devices may include Amazon Echo, Amazon Dot, Google At Home, etc. Such voice agents may use voice commands as the main interface with processors of the same. The audio commands may be received at a microphone within the device. The audio commands may then be transmitted to the processor for implementation of the command. In some examples, the audio commands may be transmitted externally, to a cloud based processor, such as those used by Amazon Echo, Amazon Dot, Google At Home, etc.

### SUMMARY

A microphone-disabling system for a voice agent speaker may include a microphone for receiving audio signals including voice command, a processor configured to process the voice commands, and an electronic circuit coupled to the processor to pass the audio signals from the microphone to the processor. The system may further include a user interface switch coupled to the electronic circuit and configured to receive user input, the electronic circuit including an electronic switch configured to disable audio commands from being transmitted to the processor in response to the user input at the user interface switch.

A voice agent device may include a microphone for receiving audio signals including voice command, an electronic circuit coupled to the microphone and a processor and configured to pass the audio signals from the microphone to the processor so that the processor may process the voice commands within the audio signals, and a switch coupled to the electronic circuit and configured to receive user input, the electronic circuit configured to disable audio commands from being transmitted to the processor in response to the user input at the switch.

### BRIEF DESCRIPTION OF THE DRAWINGS

The embodiments of the present disclosure are pointed out with particularity in the appended claims. However, other features of the various embodiments will become more apparent and will be best understood by referring to the following detailed description in conjunction with the accompanying drawings in which:
Figure 1 generally illustrates a block diagram of an example microphone disabling system;
Figure 2 generally illustrate a schematic of an example circuit diagram for the microphone disabling system including a photo interrupter;
Figure 3 generally illustrates another schematic of an example circuit diagram for the microphone disabling system including a latching switch;
Figure 4A generally illustrates an example voice agent device where the switch 125 includes a slidable switch in an ON position;
Figure 4B generally illustrates the example voice agent device of Figure 4A, where the slidable switch is in the OFF position;
Figure 4C generally illustrates the example voice agent device where the slidable switch is in an ON position and two indicators are included;
Figure 4D generally illustrates the example voice agent device of Figure 4C, where the slidable switch is in the OFF position;
Figure 4E generally illustrates another example voice agent device where the switch includes a button switch; and
Figure 4F generally illustrates the example voice agent device of Figure 4E where the button switch is not depressed.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Voice agent devices may include voice controlled personal assistants that implement artificial intelligence based on user audio commands. Some examples of voice agent devices may include Amazon Echo, Amazon Dot, Google At Home, etc. Such voice agents may use voice commands as the main interface with processors of the same. The audio commands may be received at a microphone within the device. The audio commands may then be transmitted to the processor for implementation of the command. In some examples, the audio commands may be transmitted externally, to a cloud based processor, such as those used by Amazon Echo, Amazon Dot, Google At Home, etc.

With the increasing number of voice agent devices on the market or coming to market, the voice agent devices are the next evolution of user interfaces. Such increase in popularity may lead to an increase in use across various industries such as the hospitality, health care, and corporate conference room industries. With this increase in use, concerns over security and privacy may become a concern for some users. Specifically, users may be concerned about data, such as voice data acquired by the microphone on the voice agent devices, being gathered without permission or improperly used.

Currently, voice products include a microphone mute button. This mute button may digitally disable the microphone. However, this still allows voice data to be captured, or "heard", by the microphone. Disabling microphones digitally via a mute button simply instructs the software not to send the voice data to another application, process, or server for processing. This can create skepticism that muting the microphone would still allow the "cloud" or other agent to be listening to the voice data. This skepticism is further fueled by the fear that an unintended or malicious user may be able to gain access to and use or transmit the voice data.

Disclosed herein is a microphone disabling system that electrically disables the microphones when muted. That is, the electrical signals from the microphones are severed so no electrical signals/voice data can be processed. Unlike digital muting, electrically disabling the voice data prevents the voice data from being transmitted or stored within the device or elsewhere. With electrical muting, there simply is no voice data that could ever be captured or processed.

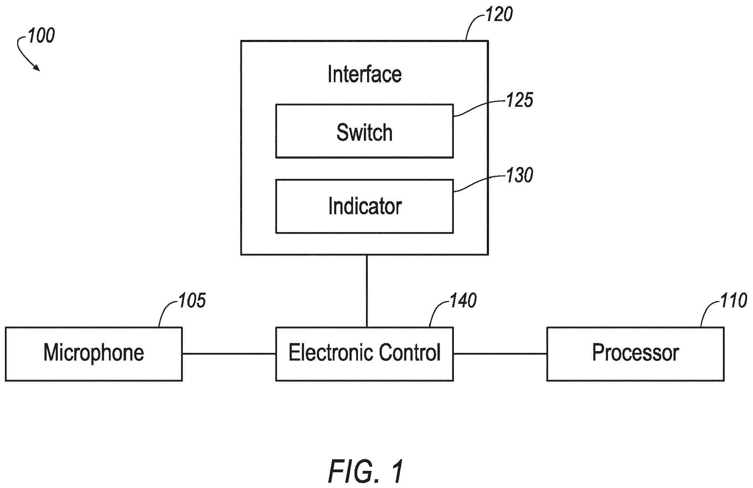

Figure 1 illustrates a block diagram of an example microphone disabling system 100. The microphone disabling system 100 may be included in a voice agent device such as a voice based personal assistant device including but not limited to a home speaker, personal computer, cellular phone, personal data assistant, smart television, laptop computer, etc. The voice agent device may also be a Polycom® or other conference calling device.

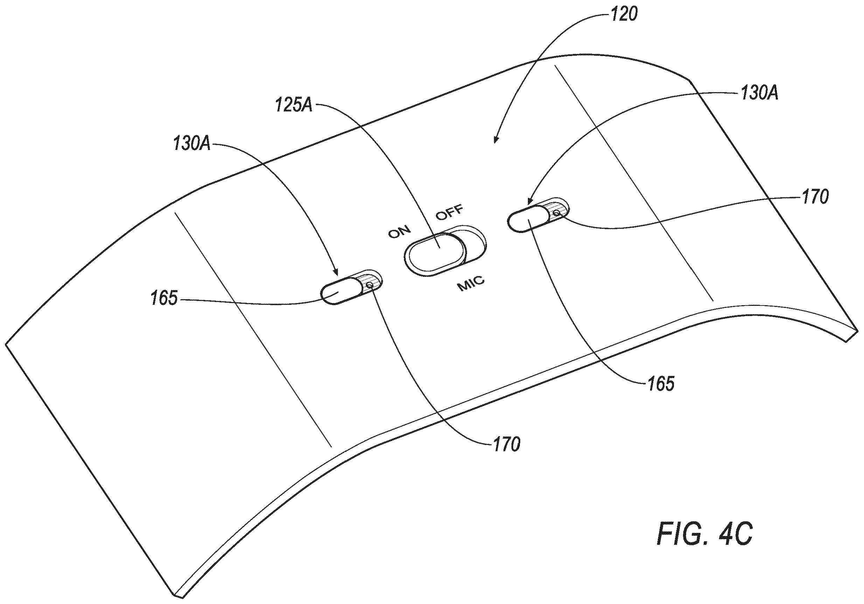

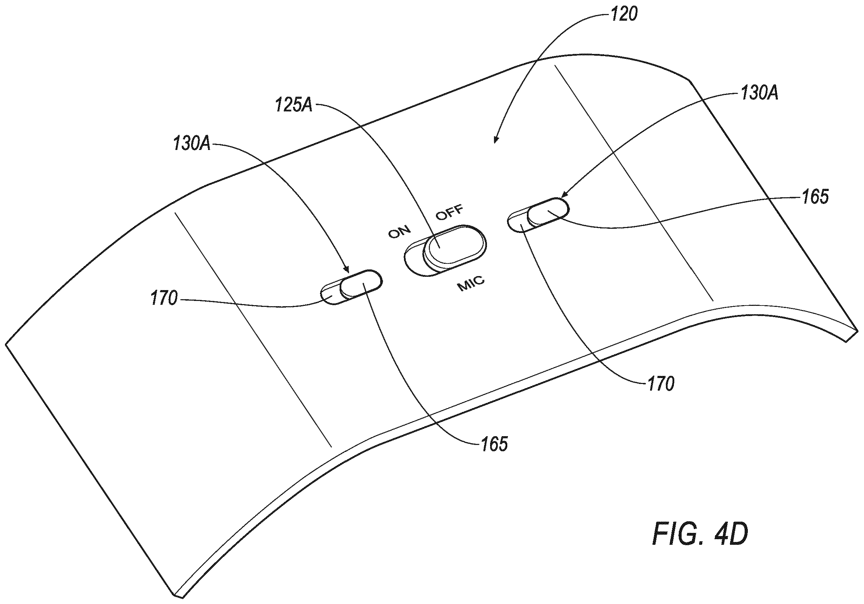

The microphone disabling system 100 includes a microphone 105 configured to receive audio commands from a user. The microphone 105 may include more than one microphone 105, as shown by way of example in Figures 4C and 4D and described below. The audio commands may include verbal instructions to perform a certain task such as playing certain audio content, placing an order for a household item from an online merchant, audibly supplying requested information such as weather, appointments, contact information, etc. These audio commands may be transmitted via an audio data signal to a processor 110.

The processor 110 may include a controller (not shown) and memory, as well as other components specific for audio processing such as limiters, amplifiers, etc. The controller may be configured to process commands received at a user interface 120 as well as commands received wirelessly from other devices. The processor 110 may be one or more computing devices such as a quad core processor for processing commands, such as a computer processor, microprocessor, or any other device, series of devices or other mechanisms capable of performing the operations discussed herein. The memory may store instructions and commands. The instructions may be in the form of software, firmware, computer code, or some combination thereof. The memory may be in any form of one or more data storage devices, such as volatile memory, non-volatile memory, electronic memory, magnetic memory, optical memory, or any other form of data storage device. In one example, the memory may include 2GB DDR3, as well as other removable memory components such as a 128 GB micro SD card.

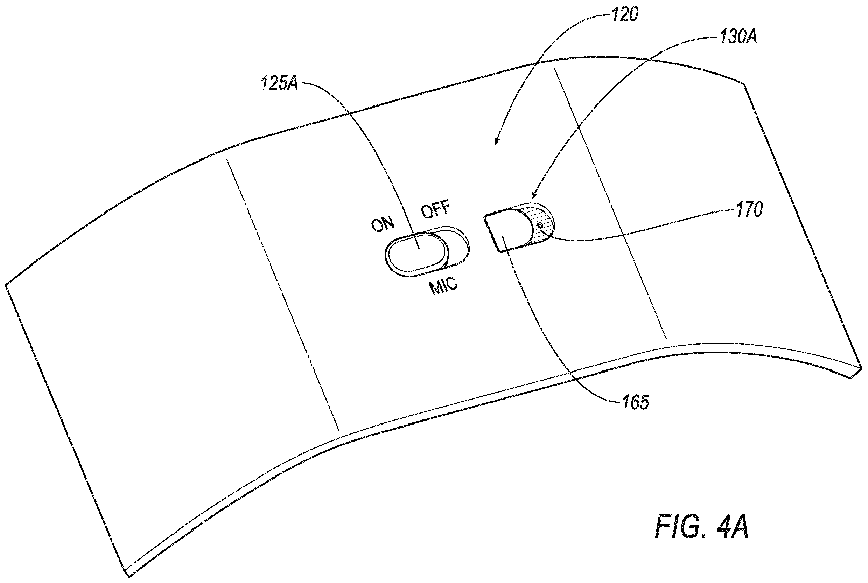

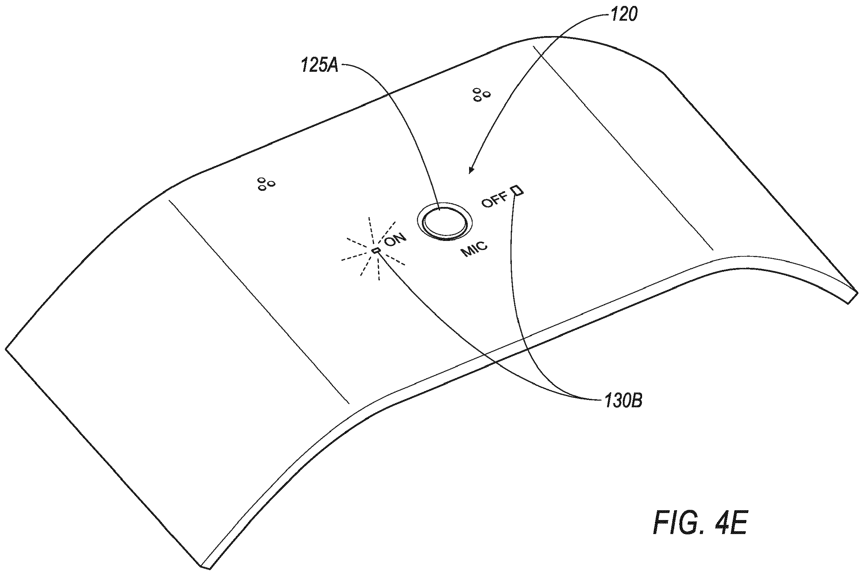

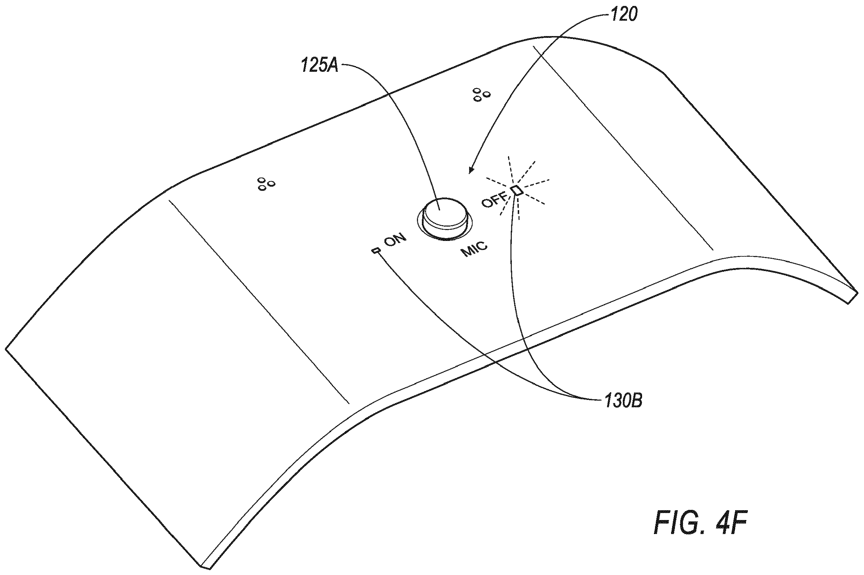

The microphone disabling system 100 may include the user interface 120. The user interface 120 may be arranged on the exterior of the voice agent device. Examples of the user interface 120 are better shown in Figures 4A-F. The user interface 120 may include a user interface switch 125 and an indicator 130. The user interface switch 125 may be a mute button configured receive user input to selectively mute or unmute the microphone. In this case, the mute button may selectively disable the audio data signal from reaching the processor 110. The user interface switch 125 is described in more detail with respect to Figures 4A-F below, but may include a slidable switch (*e.g.,* Figures 4A-D), and/or a depressible button (*e.g.,* Figures 4E and 4F).

The indicator 130 may visually indicate the status of the user interface user interface switch 125 to the user. For example, the indicator may alter in color based on the status of the user interface switch 125. The indicator 130 may include an electronically updated indicator such as a light emitting diode (LED) that updates its color based on the switch status. The indicator 130 may also include a shutter that uncovers or covers a portion of an underlay to indicate the switch status. Various examples of the indicators are described below with respect to Figures 4A-F.

The microphone disabling system 100 may include an electronic control circuit 140 (also referred to herein as electronic circuit 140 and electronic control 140). The electronic control 140 may include a switch configured to interrupt signals transmitted between the microphone 105 and the processor 110. The switch may be supplied with a bias voltage (not shown in Figure 1) and controlled in response to an actuation of the user interface switch 125 at the interface 120. The electronic control 140, may break the connection between the microphone 105 and the processor 110 in response to the microphone 105 being muted at the user interface switch 125. Upon unmuting the microphone 105, the connection between the microphone 105 and the processor 110 may close, resuming audio data signal transfer from the microphone 105 to the processor 110.

Although not shown, the microphone disabling system 100, as part of the voice agent device, may include a speaker to emit audio, a display, a power supply including one or both of stored power supply and plug-in power supply, as well as other components typically included in a voice agent device.

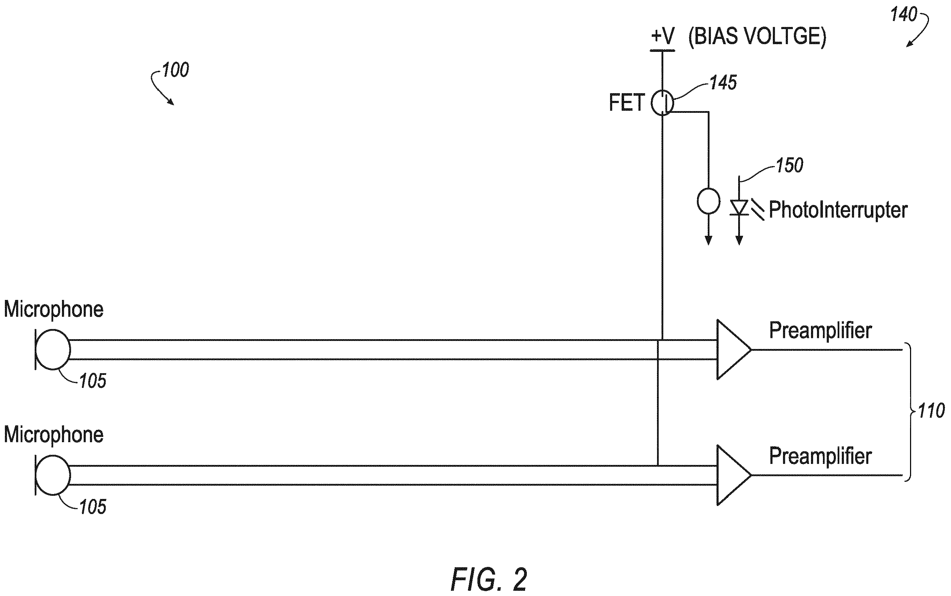

Figure 2 illustrates a schematic of an example circuit diagram for the microphone disabling system 100 where the electronic control 140 includes an electronic switch 145 controlled by a sensor 150 and powered by a bias voltage. The sensor 150 may be configured to detect the status of the user interface switch 125 and provide a corresponding output signal to the electronic switch 145. The sensor 150 may be a photo interrupter (also referred to herein as photo interrupter 150) and may be configured to pass light via an LED or laser from a transmitter to a receiver. When the receiver fails to detect any light due to an obstruction between the transmitter and receiver, then the output of the photo interrupter 150 (*i.e.,* the output signal supplied to the electronic switch 145), will change or cease.

In the example of Figure 2, when the user interface switch 125 at the interface 120 is actuated to activate the microphone mute, the obstruction moves between the transmitter and receiver of the photo interrupter 150. The output of the photo interrupter 150 may subsequently cease. The movement at the user interface switch 125 may mechanically cause the obstruction to move into place. For example, sliding the switch from one position to the mute position may cause the obstruction to slide into place.

The electronic switch 145 may be a field effect transistor (FET) (also referred to herein as FET 145), though other switches may be used. In the example of the FET 145, when output from the photo interrupter 150 ceases due to the obstruction, the FET 145 will be OFF or OPEN, creating an open circuit and disabling signals from transmitting from the microphone 105 to the processor 110. When output from the photo interrupter 150 is present, the FET 145 will be ON, or CLOSED, allowing signals to be transmitted from the microphone 105 to the processor 110.

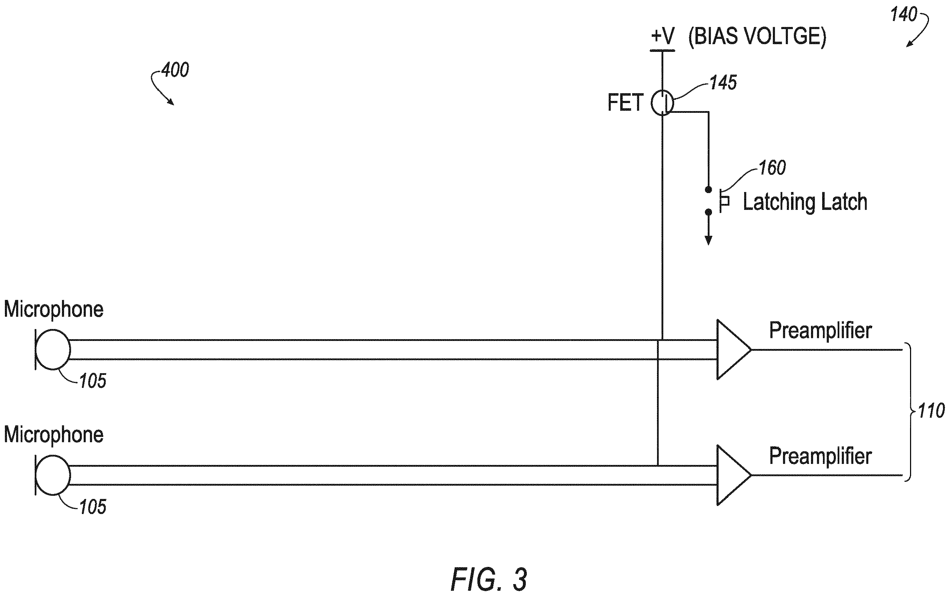

Figure 3 illustrates another schematic of an example circuit diagram for the microphone disabling system 100. In this example, the sensor may be a latch mechanism 160, or latch 160, configured to operate the electronic switch 145. The latch 160 may be a push button that is a push-push button configured to stay in a down or latched position during muting. The push-push button may be released by a double press for non-muting. The latch 160 may also be a normally open switch. When the latch 160 is open, the output to the electronic switch 145 is cut off or zero, thus closing the FET 145.

Figures 4A-F illustrate example voice agent devices with various interface 120 configurations.

Figure 4A illustrates an example voice agent device where the user interface switch 125 includes a slidable switch 125A in an ON position. The slidable switch 125A may be configured to be slid between the ON position and an OFF position. The example of Figure 4A illustrates the switch in the ON position. In one example, the slidable switch 125A may be similar to the switch 125 used with the photo interrupter 150 of the example embodiment of Figure 2. The slidable switch 125A may activate the obstruction of the photo interrupter 150.

The indicator 130 may include a sliding indicator 130A. The sliding indicator 130A may move with the slidable switch 125A. That is, as the switch slides in one direction, a shutter 165 may also move in a similar direction. The shutter 165 may cover or uncover a portion of an indicator base 170 arranged thereunder. The indicator base 170 may include two portions, each having a different color. Each color indicating a different status of the switch, either mute or unmute. In one example, a first portion may correspond to the switch 125A being in the ON position, or muted position. This color, may be for example, red. By moving the switch 125A to the left, the shutter 165 also moves to the left, uncovering the red portion.

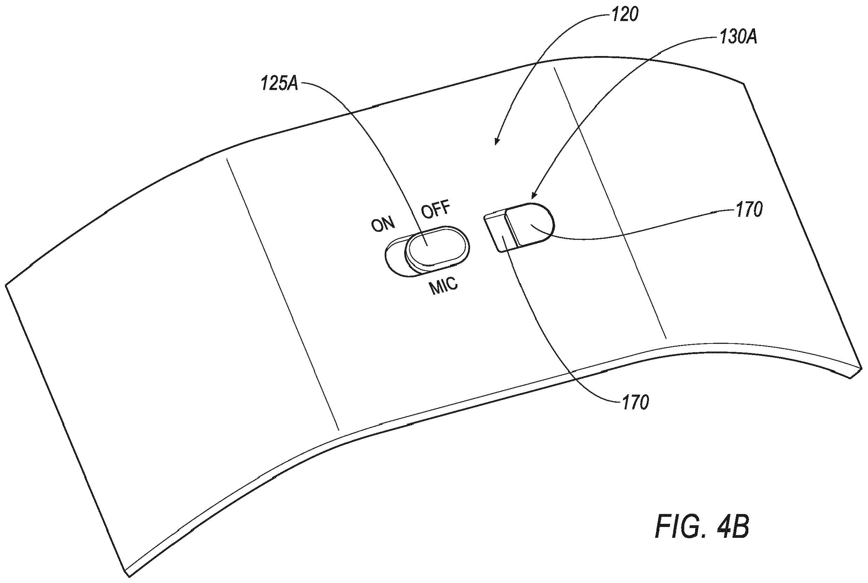

Figure 4B illustrates the example voice agent device of Figure 4A, where the slidable switch 125A is in the OFF position. In this example, the switch 125A is moved to the right. Correspondingly, the shutter 165 is also moved to the right and uncovers a second portion of the indicator base 170. In this example, the indicator base is of a similar color to the voice agent device. Additionally or alternatively, the slidable switch 125A may also be the indicator 130 where the switch 125A acts as the shutter to uncover a base underneath the switch where the base colors are exposed according to the switch position.

Figure 4C illustrates the example voice agent device where the slidable switch 125A in an ON position, similar to Figure 4A, and two indicators 130A are included. The indicators 130A may each correspond to a separate microphone 105 in the example where more than one microphone 105 is included in the voice agent. Similar to Figure 4A, each of the indicators 130A show a color corresponding to a muting status.

Figure 4D illustrates the example voice agent device of Figure 4C, where the slidable switch 125A is in the OFF position.

Figure 4E illustrates another example voice agent device where the switch 125 includes a button switch 125B. In the example of Figure 4E, the button switch 125B is in depressed state. This button switch 125B may be similar to one implemented with the example embodiment shown in Figure 3 with the latch 160. In one example, the latch 160 may be the button switch 125B.

The indicator 130 may include an electronic indicator 130B where the muting status is indicated via an electronic display. In this example the display may include one or more LEDs configured to illuminate. Here, an LED next to written text (*e.g.,* "ON" and "OFF") indicates the muting status. Additionally or alternatively, a color of the LED may indicate the muting status. For example, the LED may illuminate red in response to the switch 125B being depressed.

Figure 4F illustrates the example voice agent device of Figure 4E where the button switch 125B is not depressed. The LED corresponding to the "OFF" text may illuminate.

In view of the above, a user may have confidence that the microphone 105 has been muted. By disabling electric signals from being transmitted from the microphone, data cannot be captured and processed, unlike digital muting where data could clandestinely be captured.

The embodiments of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (*e*.*g.*, FLASH, random access memory (RAM), read only memory (ROM), electrically programmable read only memory (EPROM), electrically erasable programmable read only memory (EEPROM), or other suitable variants thereof) and software which co-act with one another to perform operation(s) disclosed herein. In addition, any one or more of the electrical devices may be configured to execute a computer-program that is embodied in a non-transitory computer readable medium programmed to perform any number of the functions as disclosed.

While exemplary embodiments are described above, it is not intended that these embodiments describe all possible forms of the invention. Rather, the words used in the specification are words of description rather than limitation, and it is understood that various changes maybe made without departing from the spirit and scope of the invention. Additionally, the features of various implementing embodiments may be combined to form further embodiments of the invention.

## Claims

1. A microphone-disabling system for a voice agent speaker, comprising:
a microphone for receiving audio signals including voice commands;
a processor configured to process the voice commands;
an electronic circuit coupled to the processor to pass the audio signals from the microphone to the processor; and
a user interface switch coupled to the electronic circuit and configured to receive user input, the electronic circuit including an electronic switch configured to disable audio commands from being transmitted to the processor in response to the user input at the user interface switch.

2. The system of claim 1, wherein the electronic circuit includes a sensor configured to detect a change in status of the user interface switch.

3. The system of claim 2, wherein the sensor is a photo interrupter configured to pass light from a transmitter to a receiver and wherein the photo interrupter ceases to pass light from the transmitter to the receiver in response to the user interface switch being actuated.

4. The system of claim 3, wherein the electronic circuit includes a field effect transistor (FET) coupled to the photo interrupter and configured to close and disable the audio signals from being transmitted from the microphone to the processor in response to the photo interrupter ceasing to pass light from the transmitter to the receiver.

5. The system of any of the preceding claims, wherein the electronic circuit includes a push-push button configured to disable the audio signals from being transmitted to the processor in response to the push-push button being in a latched position.

6. The system of claim 5, wherein the electronic circuit includes a field effect transistor (FET) configured to change states and disable the audio signals from being transmitted from the microphone to the processor in response to the push-push button being in the latched position.

7. The system of claim 6, wherein the FET is configured to open and enable the audio signals to be transmitted from the microphone to the processor in response to the push-push button being in an unlatched position.

8. The system of any of the preceding claims, further comprising a status indicator visible to the user and configured to visually indicate a status of the microphone.

9. The system of claim 8, wherein the status indicator includes a shutter and an underlay, wherein a first portion of the underlay is covered by the shutter when the user interface switch is actuated, and wherein a second portion distinguishable from the first portion of the underlay is covered by the shutter when the user interface switch is not actuated.

10. The system of claim 8 or 9, wherein the status indicator includes a light emitting diode configured to update a color based on the status of the user interface switch.

11. The system of any of claims 8 to 10, wherein the microphone includes two microphones and the status indicator includes a status indicator for each of the microphones.

12. A voice agent device, comprising:
a microphone for receiving audio signals including voice commands;
an electronic circuit coupled to the microphone and a processor and configured to pass the audio signals from the microphone to the processor so that the processor may process the voice commands within the audio signals;
a switch coupled to the electronic circuit and configured to receive user input, the electronic circuit configured to disable audio commands from being transmitted to the processor in response to the user input at the switch.

13. The device of claim 12, wherein the electronic circuit includes a sensor configured to detect a change in status of the switch.

14. The device of claim 13, wherein the sensor is a photo interrupter configured to pass light from a transmitter to a receiver and wherein the photo interrupter ceases to pass light from the transmitter to the receiver in response to the switch being actuated.

15. The device of claim 14, wherein the electronic circuit includes a field effect transistor (FET) coupled to the photo interrupter and configured to close and disable the audio signals from being transmitted from the microphone to the processor in response to the photo interrupter ceasing to pass light from the transmitter to the receiver.
